# EUROPEAN PATENT APPLICATION

(11) **EP 3 610 728 A1**
(43) Date of publication of application: **19.02.2020**
(21) Application number: 18189061.7
(22) Date of filing: 14.08.2018
(51) Int. Cl.: A01N 37/46, A01N 25/24, A01P 1/00

(54) **ANTIMICROBIAL COATINGS**

(71) Applicant: EMPA Eidgenössische Materialprüfungs- und Forschungsanstalt, CH-8600 Dübendorf (CH)
(72) Inventor: Salentinig, Stefan, 9008 St. Gallen (CH); Mohammadtaheri, Mahsa, 8006 Zurich (CH)
(74) Representative: Kasche, André

(57) **Abstract**

The present invention relates to the use of an antimicrobial liquid crystal composition for coating a surface, said composition comprising amphiphilic lipids, antimicrobial agents and water for forming liquid crystals at and/or above room temperature. The invention further relates to corresponding surface coating methods and also to surface-coated devices, optionally medical devices and implants featuring said liquid crystal compositions.

## Description

The present invention relates to the use of an antimicrobial liquid crystal composition for coating a surface, said composition comprising amphiphilic lipids, antimicrobial agents and water for forming liquid crystals at and/or above room temperature. The invention further relates to corresponding surface coating methods and also to surface-coated devices, optionally medical devices and implants featuring said liquid crystal compositions.

### Background

The interest in efficient antimicrobial surfaces and coatings is growing significantly, mostly due the decreasing effectiveness of traditional antibiotics and growing concerns over bacterial resistance. The continued misuse of antibiotics, along with rapid evolution of multi-resistant microbial pathogens, has led to a significant increase in therapy-resistant infections. This issue is one of the most significant problems in post-operative patients with biomedical implants, due to the successful colonization of multi-resistant pathogenic species at the transplant and tissue interface.

Pathogenic microbes can migrate towards, adsorb to, and form colonies on a solid surface of implants and this surface aggregation followed by microbial proliferation will cause biofilm formation. Preventing bacterial colonization via designing effective antibacterial coatings for biomedical surfaces is the key to control known risk factors of hospital infections.

To date, there are three major types of antibacterial coatings:
(i) Controlled- release antibacterial coatings: Release-based coatings employ their antibacterial activity by releasing loaded antibacterial agents over time. The release of incorporated antibacterial agents is achieved by diffusion into the aqueous medium, erosion/degradation, or hydrolysis of covalent bonds (Tiller, J.C. et al. (2001) Proc. Natl. Acad. Sci. U.S.A. 98, 5981-598).
(ii) Contact killing coatings: In this approach, antimicrobial compounds are covalently attached to the material surface by flexible, hydrophobic polymeric chains. The main mechanism of action in this method is based on membrane interactions, such as physical lysing or charge disruption. The most effective compounds for contact-killing coatings have been either cationic compounds (QACs, chitosan, AMPs, etc.) or enzymes (Gallo, J. et al. (2014) Int J Mol Sci. 15(8): 13849-13880; Cui, D. et al. (2010) Adv. Funct. Mater. 20, 3303-3312; Fang, B. at al. (2015) Colloids and Surfaces B: Biointerfaces 125 255-263; Hassan, J. et al. (2013) Trends in Biotechnol, 31(5), 295-304.).
(iii) Anti-adhesive coatings: These coatings seek to prevent the earliest step of biofilm formation using non-cytotoxic mechanisms. Surface immobilization of molecules that can resist protein adsorption, such as PEG and zwitterion, have demonstrated anti-adhesion properties *in vitro* and, despite stability issues, are generally regarded as the standard approach for anti-adhesion coatings. Physical surface modifications for use as non-specific methods to modulate bacterial adhesion have also been studied extensively (Peyre, J. et al. (2015) Colloids and Surfaces B: Biointerfaces 136, 1120-1130; Dunne, W.M. (2002) Clin. Microbiol. Rev. 15, 155-166; Variola, F. et al. (2014) Int. J. Nanomed. 9, 2319-2325).

There are still major issues related to anti-adhesion and contact killing surfaces. These surfaces are exposed to high risk of contamination and deactivation due to non-specific attachment of materials to them. Also, they can easily be buried under a layer of dead cells resulting in their deactivation. In addition, because their antibacterial action requires very close proximity to bacteria, both approaches require defect-free surfaces which makes their handling even more challenging.

Antimicrobial peptides (AMPs) are receiving increasing attention as an alternative choice to traditional antibiotics. Many are part of the innate immune system and their main mechanism of action involves interactions with the bacterial membrane leading to its rupturing and breakdown of the bacteria. Due to this, pathogens have fewer possibilities to develop resistance to AMPs compared to traditional antibiotics. However, their poor water solubility and fast degradation in the biological milieu is limiting their application.

In the context of drug delivery vesicles, the inventors recently reported stabilized colloidal dispersions of glycerol monooleate, Pluronic F127 and the antimicrobial peptide LL-37 in an aqueous buffer (Gontsarik M. et al. 2018, Biomater. Sci., 26, 803-812). The emulsion was homogenized by three consecutive ultrasonication steps to achieve colloidally stable dispersions. These dispersions are colloidally stable nanoparticles that required high-energy input (i.e. ultrasonication at high energy) to be formed and also required the addition of a hydrophilic stabilizer (triblock copolymer Pluronic F127) to maintain colloidal stability. The dispersions reported by Gontsarik et al. are taught for administration to a patient in the context of carrier vesicles for, e.g., drugs.

It is the objective of the present invention to provide an improved antimicrobial composition suitable for coating surfaces, optionally for surfaces of medical devices and implants.

In a first aspect, the present invention is directed to the use of an antimicrobial liquid crystal composition for coating a surface, wherein the composition comprises, optionally consists of:
(a) one or more amphiphilic lipids, optionally having a hydrophilic-lipophilic balance (HLB) value of less than 10;
(b) one or more antimicrobial agents selected from the group consisting of antimicrobial peptides, optionally amphiphilic antimicrobial peptides, antimicrobial oils and hydrophobic antibiotics; and
(c) water;
wherein the composition forms liquid crystals at and/or above room temperature, optionally at temperatures at and/or above 15, 20 or 25 °C.

It was surprisingly found that a composition comprising amphiphilic lipids, antimicrobial agents and water, and forming liquid crystals spontaneously (e.g., independent of energy intake, being a thermodynamically stable system) through self-assembly of the components, establishes a coating with excellent adhesive and sustained antimicrobial properties. For example, no further components (e.g. polymers, stabilizers, surfactants) are required to form the liquid crystals, and the formation of the liquid crystals does not depend on the polymerization of pre-polymers into a polymeric matrix. Without wishing to be bound by theory, it is believed that the spontaneous formation of the liquid crystal is steered through the non-covalent intermolecular interactions between the molecules of the composition (e.g., hydrophobic interactions, hydrogen bonding, coulomb interactions and hydration). Based on these interactions, the molecules inside the self-assembled liquid crystal can, e.g., spontaneously, localize themselves based on their chemical properties and the resulting intermolecular forces.

The composition for use according to the present invention is suitable for coating surfaces because it forms a stable liquid crystal state which adheres to surfaces and remains stable.

In the liquid crystal composition for use according to the present invention, the confined nano-sized inner structures of the hydrophobic film may comprise hydrophilic nano-sized water droplets, sheets, rods or channels, e.g. having a diameter in the range of, e.g., 0.5 nm to hundreds of nm. These hydrophilic features inside the hydrophobic film contain water, the hydrophilic groups of the amphiphilic lipids and antimicrobial agents, and optionally further, e.g. amphiphilic and/or polar components. For example, stimuli-induced transformations in the liquid crystal structure through factors including, e.g., temperature, CO₂, humidity, pH, bacteria metabolites or specific enzymes, can trigger the antimicrobial activity of the inventive composition. In other words, these stimuli can be used to, e.g., tailor, adapt, activate, postpone or deactivate the antimicrobial activity of the inventive composition.

An example for humidity responsiveness of the composition for use in the present inventtion is provided in Example 8 below. Therein, it is shown that the composition transforms reversibly from a lamellar liquid crystalline structure to more complex 3-dimensional structures such as the sponge phase upon increasing the relative humidity from 5 to 90%. Also, temperature and pH changes can result in nanostructural transformations in the composition to trigger the antimicrobial activity.

In an embodiment of the present invention, a pH change of about 0.1, optionally about 1, optionally about 3 units, optionally to basic or to acidic values, causes the composition for use according to the invention to change its nanostructure and have increased antimicrobial efficacy.

In another embodiment of the present invention, a temperature change of about 1, optionally about 10, optionally about 20 degrees, optionally to higher or to lower values, causes the composition for use according to the invention to have increased antimicrobial efficacy.

The antibacterial properties of a composition for use according to the present invention are demonstrated for representative Examples below. Table 1 demonstrates that coatings with different internal liquid crystal structures of a representative composition for use according to the present invention have an antibacterial effect on three different representative bacterial strains (*E. coli, P. Aeruginosa* and *S*. *Aureus*)*,* while the negative control (nanostructured coating based on amphiphilic lipids only) does not have any antibacterial effect.

### Table 1

**Table1. Antibacterial performance of different film nanostructures on bacterial strains, including both gram-negative and positive strains. GMO = glycerol monooleate.**

| Bacteria | LC thin film structure | | |
|---|---|---|---|
| | **Control (GMO coating)** | **Cubic (Im3m, GMO / LL-37 = 9 / 1)** | **Lamellar (GMO / LL-37 = 1 / 1)** |
| *E.coli* | No antibacterial effect | Antibacterial effect | Antibacterial effect |
| *p. Aeruginosa* | No antibacterial effect | 2 log kill | 4 log kill |
| *S.aureus* | No antibacterial effect | 3 log kill | 6 log kill |

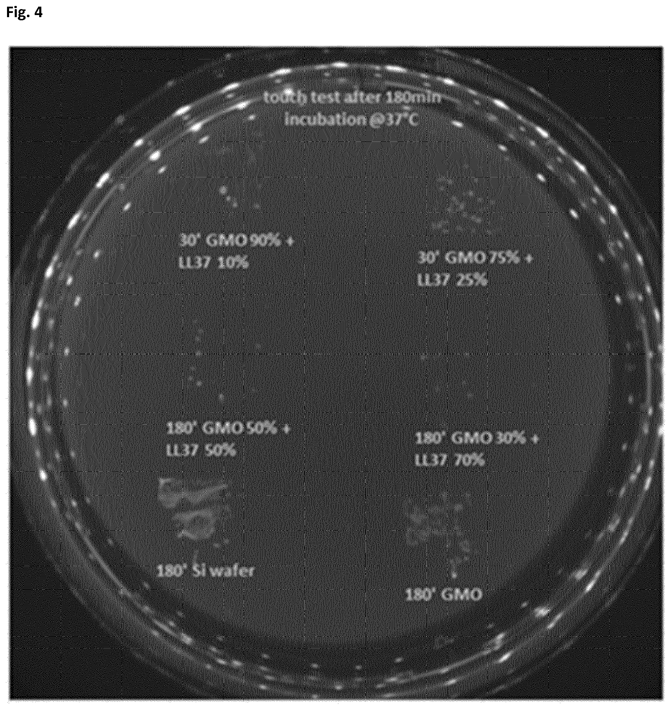

Additionally, Fig. 4 below confirms the antibacterial effect of silicon wafers coated with a composition for use according to the present invention at different weight percentages of amphiphilic lipids to antibacterial agents against *E. coli.*

In the context of the present invention, the term "liquid crystal" is defined as commonly understood by the skilled person. The term refers to a composition which has properties between those of conventional liquids and those of solid crystals. In other words, a "liquid crystal" according to the present invention is not a solid composition, e.g. not a wax, but a composition that can form or comprise ordered to highly ordered mesoscopic, e.g. semi-crystalline or crystal-like, structures while not being solid. The form of the structures in the liquid crystal can, e.g., transform in response to water content, temperature, pH, chemical compounds (e.g. bacterial metabolites) or specific enzymes. The structural change in the liquid crystal composition can alter the size and shape of the water channels in the liquid crystal which can modify, e.g. the release of components, electron transport, and may further protect the material comprised within the liquid crystal composition, e.g. the antimicrobial agent(s), e.g. from degradation.

The above properties allow for stable and yet adaptable antibacterial properties of the composition of the invention. It is noted that the manufacture of the composition for use according to the present invention does not necessarily require surfactants or stabilizers such as poloxamers or hydrophilic triblock copolymers (e.g. Pluronic F127).

The liquid crystal composition for use herein is mostly hydrophobic, i.e. comprises a lipid matrix with aqueous domains. The amount of water, lipid composition and pH can be adjusted by the skilled person according to the properties that are desired, and the effect of the water content, composition and pH on the structure of the liquid crystal composition can be directly determined, e.g. by the methods specified in the Examples below (e.g. GISAXS, AFM, ellipsometry, see Example 1).

In an embodiment the composition for use according to the present invention comprises about 0.1 to 80%, optionally about 1 to 45%, optionally about 5 to 40%, or about 30 to 40% water. In another embodiment, the composition for use according to the present invention features a pH of about 1.0 to 9.0, optionally about 2.0 to 8.0, optionally about 4.0 to 8.0, or about 6.0 to 8.0.

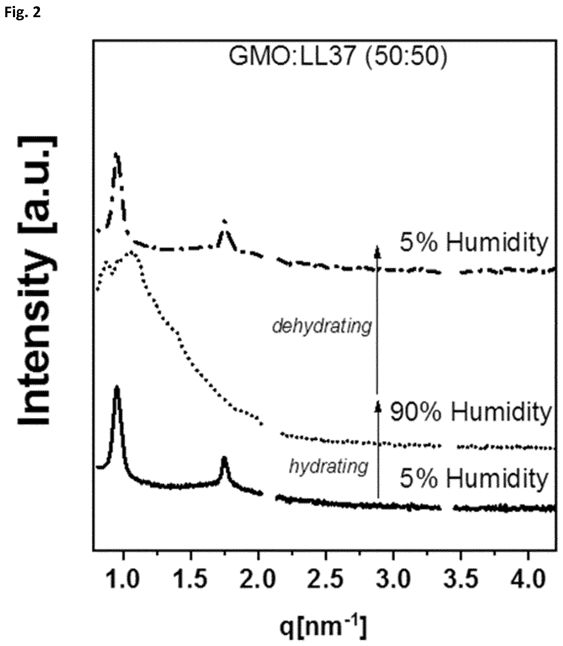

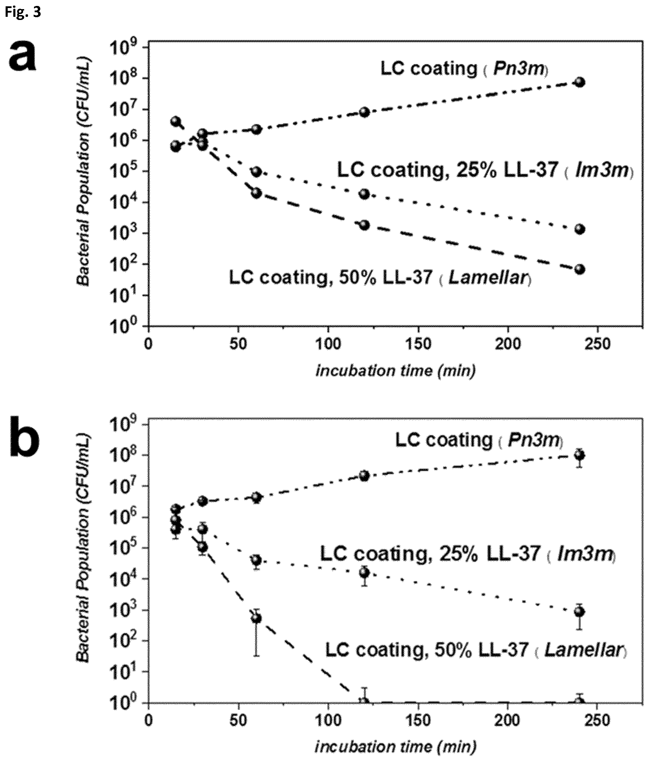

Figure 2 demonstrates the structural transformation of a representative liquid crystal composition for use according to the present invention. It is noted that the antimicrobial effect of the composition can be achieved for substantially all liquid crystal structures comprising AMPs or antimicrobial agents (see, e.g., Figs. 3 and 4).

An "amphiphilic" lipid or peptide for use in the present invention is any lipid or peptide that possesses both hydrophilic and lipophilic properties in the same molecule.

The "hydrophilic-lipophilic balance" value (HLB) is determined by calculating values for different regions of an amphiphilic molecule as described in the art, e.g. by the formula HLB = 20* Mh/M, wherein Mh is the molecular mass of the hydrophilic portion of the molecule and M is the molecular mass of the whole molecule. A value of 20 corresponds to a rather hydrophilic molecule.

An "antimicrobial" composition or agent for use in the present invention is any composition or agent that reduces the growth of microbes or kills microbes such as, e.g. bacteria, fungi or viruses.

The term hydrophobic, as used herein, optionally refers to any compound having a logP value in octanol/water of greater than 1.

The amphiphilic lipids for use in the present invention are non-crystalline (i.e. liquid) in the composition at room temperature and above, and, thus, do not form waxes or solids. For example, non-crystalline, as used herein, refers to the molecular sub-nanometer range (e.g. XRD measurements). However, these lipids in the liquid state at or above room temperature, e.g. at or above 15 °C, do form a supramolecular liquid crystalline structure based on their intermolecular interactions as described above. In other words, the composition for use according to the present invention is one, wherein the amphiphilic lipids are in a liquid state in the composition and can form liquid crystals at or above room temperature, optionally at temperatures above 15, 20 or 25 °C. Therefore, all amphiphilic lipids are suitable for use in the present invention, as long as they are non-crystalline (i.e. liquid) in the composition at room temperature and above, and, thus, do not form waxes or solids when formulated in the composition.

It is further noted that the materials of the composition for use according to the present invention and, thus, the composition itself may be biodegradable and non-toxic to humans and animals.

In one embodiment of the present invention, the composition optionally does not comprise any polymers, pre-polymers, stabilizers, surfactants or poloxamers and/or does not comprise a polymeric matrix.

A coating can be any material, e.g. a layer, suitable for being placed and remaining at least temporarily on a surface, e.g. of a device.

In one embodiment, the use according to the present invention is one, wherein the amphiphilic lipids are selected from the group consisting of fatty acids, mono- and diglycerides of fatty acids, mono- and diesters of propylene glycol, glycolipids, phospholipids, 1-palmitoyl-2-oleoyl-sn-glycero-3-phosphoglycerol, 1-palmitoyl-2-oleoylphosphatidylcholine, dipalmitoylphosphatidylcholine, phosphatidylglycerol, phosphatidylglycerol, oleic acid monoglyceride, oleic acid diglyceride, diglycerol monooleate, diisopropyl dilinoleate, phytantriol, oleic acid, linoleic acid monoglyceride, linoleic acid diglyceride, linoleic acid, palmitic acid, palmitic acid monoglyceride, palmitic acid diglyceride, ascorbyl palmitate, palmitoleic acid, palmitoleic acid monoglyceride, palmitoleic acid diglyceride, sapienic acid, sapienic acid monoglyceride, sapienic acid diglyceride, elaidic acid, elaidic acid monoglyceride, elaidic acid diglyceride, docosahexaenoic acid, docosahexaenoic acid monoglyceride, docosahexaenoic acid diglyceride, eicosapentaenoic acid, eicosapentaenoic acid monoglyceride, eicosapentaenoic acid diglyceride, alkyl and alkylen amines, optionally oleoylamine, oleoylethanolamide, lauric acid, lauric acid monoglyceride, lauric acid diglyceride, myristic acid, myristic acid monoglyceride, myristic acid diglyceride, and urea-based lipids.

Additionally, the composition for use according to the present invention may comprise further hydrophobic molecules, such as lipophilic vitamins, alcohols, flavonoids, terpenes, turpentines, carotinoids, hydrophobic and amphiphilic peptides, proteins or mixtures thereof, optionally having a HLB value lower than 10 and/or an logP value above -1, preferably above 0.

In another embodiment, the use according to the present invention is one, wherein the carbon number of the amphiphilic lipids is between 8 and 30, optionally between 10 and 24 and/or the alkyl chains thereof are mono-, di- or poly-unsaturated.

In a further embodiment, the composition for use according to the present invention is one, wherein the melting point of the amphiphilic lipids is between 5 and 60 °C, optionally between 5 and 40 °C. In this context, the melting point refers to the melting point a lipid has in the absence of further components. Without wishing to be bound by theory, it was found that the nano-confinement in the liquid crystal composition for use in the present invention can decrease the melting point of the amphiphilic lipids and/or hinder their crystallization. In an embodiment of the present invention, the composition comprises amphiphilic lipids which are liquid (e.g. in melted state, amorphous) within the inventive composition at room temperature and/or above.

In another embodiment, the composition for use according to the present invention is one, wherein the antimicrobial agent is selected from the group consisting of proteins optionally LL-37 and nisin; essential oils from plants; essential oils from black pepper, tea tree, copaiba, cinnamon, clove, citronella, pumpkin, lime and/or lemon; antimicrobial peptides; Tn-AFP1 from coconut water, PaDef from Avocado, J1 from fruit peppers, Ca-LTP1 from chili pepper; gramicidin; melittin; and alamethicin.

In another embodiment, the composition for use according to the present invention is one, wherein the weight ratio between the amphiphilic lipids and the antimicrobial agents is selected from the group consisting of 99:1 to 1:99, optionally 30:70 to 90:10, optionally 40:60 to 80:20, optionally 50:50.

In addition to water content or pH of the composition, the weight ratio between the amphiphilic lipids and the antimicrobial agents can change the structure of the liquid crystal composition for use according to the present invention. Hence, the liquid crystal structure of the composition can also be adapted by adjusting the weight ratio between the amphiphilic lipids and the antimicrobial agents (see, e.g., Fig. 1). It is noted that the antimicrobial effect of the composition can be achieved for substantially all liquid crystal structures (see, e.g., Figs. 3 and 4). However, the weight ratio, pH and/or water content of the liquid crystal composition may, e.g., be used to fine-tune, e.g., the release properties for the antimicrobial agents or for protecting the agents from external factors within the liquid crystal structure.

In a further embodiment, the composition for use according to the present invention is one, wherein the composition has a structure selected from the group consisting of inverse bicontinuous cubic phases (*Im3m, Ia3d* and *Pn3m* type), inverse hexagonal phase (*H₂* symmetry), discontinuous micellar cubic phase (*Fd3m* type), lamellar phase (*Lₐ*), sponge phase (*L₃*), inverse microemulsion (*L₂*) and mixtures thereof.

The structures of the composition can be directly verified with methods known in the art, e.g. by the methods specified in the Examples below.

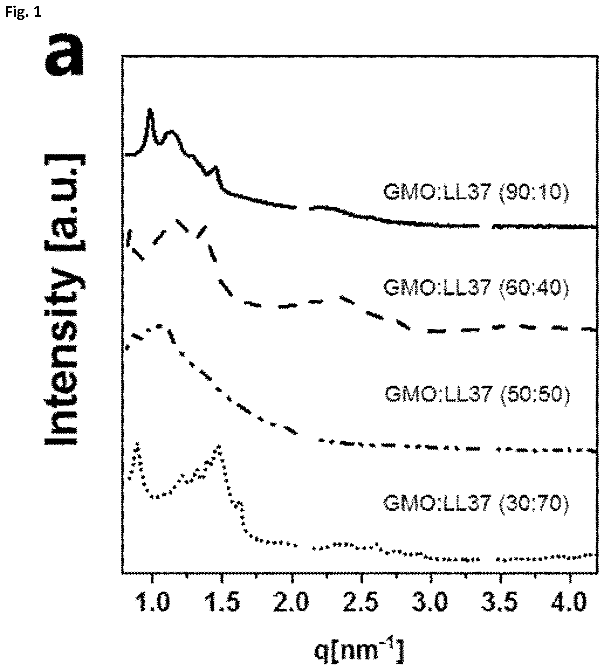

Without wishing to be bound by theory, it was shown that depending on the structure type, the dimensions of the hydrophilic domains in the liquid crystal composition for use according to the present invention can be about 0.2 to about 100 nm in diameter, optionally in the range between 1 to 30 nm. Figure 1 shows the response of the film nanostructure to the AMP / lipid ratio for a representative example of LL-37 / glycerol monooleate (GMO).

In another embodiment, the composition for use according to the present invention is one, wherein the amphiphilic lipid is a monoglyceride, optionally monoolein, optionally glycerol monooleate and/or the antimicrobial agent is an antimicrobial peptide, optionally LL-37.

In another embodiment, the use according to the present invention is one, wherein the antimicrobial liquid crystal composition is used for coating, optionally spin-coating, dip-coating, spraying or drop-casting, a surface.

In a further embodiment, the use according to the present invention is one, wherein the surface to be coated is a surface of a medical device, optionally of a medical implant, optionally a surface selected from the group consisting of silicon wafers, glass, rubber latexes, polyurethanes, catheter surfaces, titanium oxide and ceramics.

By coating the surface of a device, e.g. a medical device or implant, with the liquid crystal composition as described herein, bacterial infections can be avoided or reduced.

In a further aspect, the present invention is directed to a method for coating a surface with an antimicrobial liquid crystal composition, the method comprising the following steps:
(i) providing a surface to be coated;
(ii) contacting the surface of step (i) with an antimicrobial liquid crystal composition comprising:
   (a) one or more amphiphilic lipids, optionally having a hydrophilic-lipophilic balance (HLB) value of less than 10;
   (b) one or more antimicrobial agents selected from the group consisting of antimicrobial peptides, optionally amphiphilic antimicrobial peptides, antimicrobial oils and hydrophobic and/or amphiphilic antibiotics; and
   (c) water;
wherein the composition forms liquid crystals at and/or above room temperature, optionally at temperatures at and/or above 15, 20 or 25 °C to form an antimicrobial liquid crystal coating on the surface.

The surface to be coated can be any surface, e.g. a surface of a medical device, optionally of a medical implant, optionally a surface selected from the group consisting of silicon wafers, glass, rubber latexes, polyurethanes, catheter surfaces, titanium oxide and ceramics.

In another embodiment, the method of the present invention is one, wherein the method comprises the following steps:
(i) providing a surface to be coated;
(ii) providing and mixing one or more amphiphilic lipids, optionally having a hydrophilic-lipophilic balance (HLB) value of less than 10, and one or more antimicrobial agents selected from the group consisting of antimicrobial peptides, optionally amphiphilic antimicrobial peptides, antimicrobial oils and hydrophobic and/or amphiphilic antibiotics to form a non-hydrated mixture;
(iii) drop casting the mixture of step (ii) onto the surface of step (i); and
(iv) hydrating the coated surface to form an antimicrobial liquid crystal coating, optionally by immersing the surface in an aqueous solution, optionally a solution selected from the group consisting of phosphate buffered saline, imidazole-, acetate-, citrate-, HEPES-, bicarbonate, carbonate-, and Tris buffer, optionally at pH between about 2 to about 9, human plasma, blood, water and water-vapor.

In another embodiment, the method of the present invention is one, wherein the method comprises the following steps:
(i) providing a surface to be coated;
(ii) providing one or more amphiphilic lipids, optionally having a hydrophilic-lipophilic balance (HLB) value of less than 10, optionally dissolved in a solvent suitable for dissolving the lipid, optionally a solvent selected from the group consisting of ethanol, chloroform, THF, DMSO, methanol, propanol, and acetone;
(iii) applying, optionally drop casting or spin coating, the lipid, optionally the lipid/solvent mixture onto the surface of step (i) and optionally evaporating the solvent;
(iv) hydrating the lipid layer with water to form a liquid crystalline film, optionally of a defined structure, on the surface;
(v) providing one or more antimicrobial agents selected from the group consisting of antimicrobial peptides, optionally amphiphilic antimicrobial peptides, antimicrobial oils and hydrophobic and/or amphiphilic antibiotics, optionally dissolved and/or suspended in a solvent suitable for dissolving and/or suspending the antimicrobial agent, optionally a solvent selected from the group consisting of phosphate buffered saline, imidazole-, acetate-, citrate-, HEPES-, bicarbonate, carbonate-, and Tris buffer, optionally at pH between 2-9;
(vi) contacting, optionally by immersing, the coated surface of step (iv) with the antimicrobial agent of step (v) to form an antimicrobial liquid crystal coating.

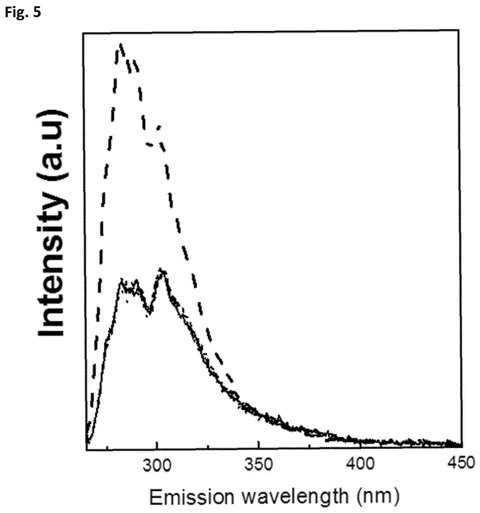

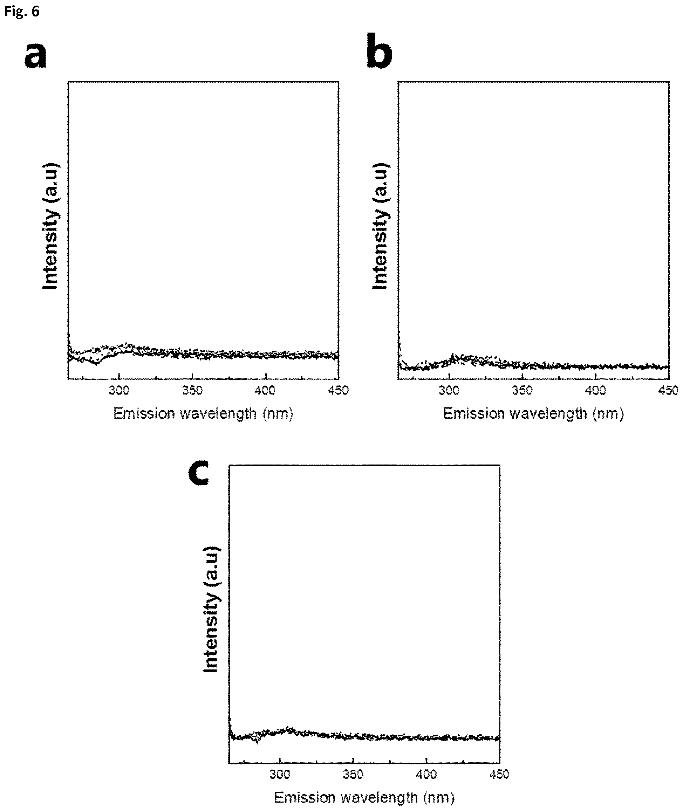

In the Examples, a representative example is provided for spin coating and for drop casting of the inventive composition on a surface. The Examples further demonstrate that antimicrobial agents can be stably and spontaneously integrated into the liquid crystal composition and do not leak out during the coating process (see Figs. 5 and 6).

In another embodiment, the method of the present invention is one, wherein the amphiphilic lipids are selected from the group consisting of fatty acids, mono- and diglycerides of fatty acids, mono- and diesters of propylene glycol, glycolipids, phospholipids, 1-palmitoyl-2-oleoyl-sn-glycero-3-phosphoglycerol, 1-palmitoyl-2-oleoylphosphatidylcholine, dipalmitoylphosphatidylcholine, phosphatidylglycerol, phosphatidylglycerol, oleic acid monoglyceride, oleic acid diglyceride, diglycerol monooleate, diisopropyl dilinoleate, phytantriol, oleic acid, linoleic acid monoglyceride, linoleic acid diglyceride, linoleic acid, palmitic acid, palmitic acid monoglyceride, palmitic acid diglyceride, ascorbyl palmitate, palmitoleic acid, palmitoleic acid monoglyceride, palmitoleic acid diglyceride, sapienic acid, sapienic acid monoglyceride, sapienic acid diglyceride, elaidic acid, elaidic acid monoglyceride, elaidic acid diglyceride, docosahexaenoic acid, docosahexaenoic acid monoglyceride, docosahexaenoic acid diglyceride, eicosapentaenoic acid, eicosapentaenoic acid monoglyceride, eicosapentaenoic acid diglyceride, alkyl and alkylen amines, optionally oleoylamine, oleoylethanolamide, lauric acid, lauric acid monoglyceride, lauric acid diglyceride, myristic acid, myristic acid monoglyceride, myristic acid diglyceride, and urea-based lipids.

In a further embodiment, the method of the present invention is one, wherein the carbon number of the amphiphilic lipids is between 8 and 30, optionally between 10 and 24 and/or the alkyl chains are mono-, di- or poly-unsaturated.

In another embodiment, the method of the present invention is one, wherein the melting point of the amphiphilic lipids is between 5 and 60 °C, optionally between 5 and 40 °C.

In a further embodiment, the method of the present invention is one, wherein the antimicrobial agent is selected from the group consisting of proteins, optionally LL-37 and nisin; essential oils from plants; essential oils from black pepper, tea tree, copaiba, cinnamon, clove, citronella, pumpkin, lime and/or lemon; antimicrobial peptides; Tn-AFP1 from coconut water, PaDef from Avocado, J1 from fruit peppers, Ca-LTP1 from chili pepper; gramicidin; melittin; and alamethicin.

In another embodiment, the method of the present invention is one, wherein the weight ratio in the coating between the amphiphilic lipids and the antimicrobial agents is selected from the group consisting of 99:1 to 1:99, optionally 30:70 to 90:10, optionally 40:60 to 80:20, optionally 50:50.

In a further embodiment, the method of the present invention is one, wherein the coating has a structure selected from the group consisting of inverse bicontinuous cubic phases (*Im3m, Ia3d* and *Pn3m* type), inverse hexagonal phase (*H₂* symmetry), discontinuous micellar cubic phase (*Fd3m* type), lamellar phase (*Lₐ*)*,* sponge phase (*L₃*), inverse microemulsion (*L₂*) and mixtures thereof.

In another embodiment, the method of the present invention is one, wherein the amphiphilic lipid is a monoglyceride, optionally glycerol monooleate and/or the antimicrobial agent is an antimicrobial peptide, optionally LL-37.

In a further embodiment, the method of the present invention is one, wherein the surface to be coated in step (i) is a surface of a medical device, optionally of a medical implant, optionally a surface selected from the group consisting of silicon wafers, glass, rubber latexes, polyurethanes, catheter surfaces, titanium oxide and ceramics.

In a further aspect, the present invention is directed to a device, optionally a medical device or medical implant, optionally having a surface selected from the group consisting of silicon wafers, glass, rubber latexes, polyurethanes, catheter surfaces, titanium oxide and ceramics, comprising an antimicrobial liquid crystal composition coating obtainable, optionally prepared by a method according to the present invention.

In the context of the device described herein, it is noted that in one embodiment, the coating on the device must merely be obtainable by the method of the present invention. In other words, the present invention also encompasses any device comprising a composition coating as described above if such a coating on the device can be obtained by a method of the present invention, even if the said composition coating was obtained by another, e.g. different, method.

In the following, the present invention will be illustrated by means of representative examples, none of which should be interpreted as limiting the scope of the invention as defined by the appended claims.

### Figures

**Fig. 1** shows GISAXS pattern showing the change in nanostructure of the GMO / LL-37 film on silicon wafer at selected GMO / LL-37 ratios. The shift in Bragg peak position and change in GISAXS pattern shows that the encapsulation of LL-37 into the film strongly influences the internal film nanostructure.
**Fig. 2** shows hydration induced nanostructural transformations in the GMO: LL-37 film (1/1 weight ratio). The humidity was first increased from 5 to 90% with a rate of ∼ 1/min and then kept at 90% for 20 min to equilibrate the sample followed by decreasing to 5% and equilibration of 20 min before measurement. This further demonstrates the stability of the coating on the surface and confirms the reversibility of the nanostructural transformations in the film.
**Fig. 3** shows the antibacterial activity of the GMO / LL-37 coatings on silicon wafers against different bacteria strains. a) *Pseudomonas Aeruginosa* and b) *S.aureus.* Whereas the coating in absence of LL-37 (Pn3m structure) was not active against bacteria, the LL-37 containing coating with internal Im3m structure and even more with lamellar structure were highly active against both, Gram-negative (*Aeruginosa*) and Gram-positive (*S.aureus*) bacteria strains. It is important to note that only the total LL-37 concentration was kept constant (only GMO content was modified to achieve the different GMO / LL-37 ratios).
**Fig. 4** shows an antibacterial touch test against *E.coli* using silicon wafers coated with liquid crystalline films at different nanostructures (defined by the GMO / LL-37 ratio). After 180 minutes of incubation the number of colonies has been reduced for all LL-37 containing coatings. The highest reduction was observed for the coatings with 50 and 70 % LL-37 relative to GMO (lamellar structure and sponge phase). The concentration of LL-37 has been kept constant at 80 µg.
**Fig. 5** shows fluorescent spectrums of the LL-37 solution before and after integration with GMO thin film on silicon wafer (GMO / LL-37 50:50 weight ratio). ------ Graph is the spectrum before loading, and the rest of the graphs are spectrum after LL-37 integration after 3 hours (six repeats).
**Fig. 6** shows fluorescent spectra of the excess buffer solution collected after incubation with GMO / LL-37 thin films for up to three hours a) GMO/LL-37 90/10, b) GMO/LL-37 50/50 and c) GMO/LL-37 30/70 weight ratio. No significant release of the LL-37 from the coating into buffer was observed.

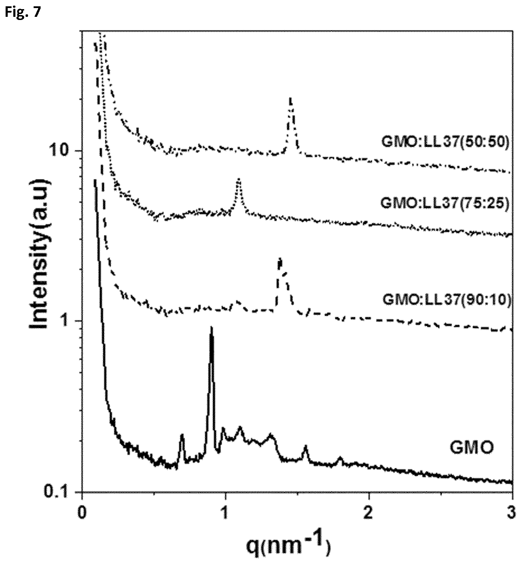

**Fig. 7** shows SAXS curves of pre-mixed GMO / LL-37 thin films formed on glass substrates with different GMO / LL-37 weight ratios. The Bragg reflections in these patterns can be related to the Pn3m bicontinuous cubic structure (GMO / LL-37 = 100 / 0) the Im3m type bicontinuous cubic structure at GMO / LL-37 = 90 / 10, the H₂ structure at GMO / LL-37 = 75/25 and the lamellar structure at GMO / LL-37 = 50/50.

### Examples

### Example 1: Materials and methods

**Glycerol monooleate** (GMO, purity ≥ 90%) was obtained from Riken Vitamin co., Ltd, Japan. Ethanol and chloroform (both *p*.*a*. grade) were purchased from Sigma-Aldrich, Buchs, Switzerland. Ultra-pure water (resistivity > 18 MΩcm) was used for the preparation of all samples. Phophate buffered saline (PBS) at pH = 7.4, was used for the experiments under full hydration.

**SiliconP-type silicon wafers** were obtained from Si-Mat and laser-cut to either 1 x 1 cm for the measurements in the humidity cell or 5mm x 2 mm for the study under full hydration.

**Atomic Force Microscopy (AFM) study:** An AFM (i.e. Bio-AFM from Nanosurf, Liestal, Switzerland) was used in dynamic mode. A minimum of three different spots on the same substrate was measured and representative images selected.

**Ellipsometry study:** A Nanofilm EP4 imaging ellipsometer (Accurion, Goettingen, Germany) equipped with a 50 mW broadband diode laser with a wavelength of 658 nm and a 10x objective (field-of-view of 0.4 mm) was used to measure the thickness of the GMO layer. The data were collected at incident angles between 50° and 65° at 1° steps. The data was analysed with the software EP4Modeling software (Accurion, Goettingen, Germany) using the software default optical constants for the silicon wafer, silicon oxide. The silicon oxide layer of the cleaned wafers was characterized prior to the deposition of the GMO film, with a resulting SiO₂ thickness of ∼ 2.2 nm for all wafers. The refractive index of the GMO film and film thickness were obtained by fitting all data collected.

**Grazing incidence small angle X-ray scattering (GISAXS) and small angle X-ray scattering (SAXS) Measurements:** The nanostructure of the coating was probed with GISAXS and SAXS measurements on lab and synchrotron sources. In the laboratory, a Bruker Nanostar (Bruker AXS, Karlsruhe, Germany) connected to an X-ray source (Incoatec IµSCu, Geest-hacht, Germany) operating at 50 kV and 600 µA with a sealed-tube Cu anode. A Göbel mirror was used to convert the divergent polychromatic X-ray beam into a focused beam of monochromatic Cu Kα radiation (λ = 1.54 Å). The 2D SAXS patterns were acquired within 1 h using a VÅNTEC-2000 detector (Bruker AXS, Karlsruhe, Germany) with active area 14 x 14 cm² and with a pixel size of 68µm x 68µm. Two dimensional scattering patterns were integrated into the one-dimensional scattering function I(q). Lamellar and cubic liquid crystalline space groups were determined by indexing the relative positions of the Bragg peaks in the scattering profiles. Sponge phase was characterized using its unique scattering signature with the broad correlation peak reflecting the mean nanochannel distance.

### Example 2: Preparation of stimuli-responsive antimicrobial films by pre-coating of inverse type liquid crystalline films and post-integration of AMPs.

The protocol for this two-step process was as following:
(i) lipid base coating formed on substrate surface by different methods including drop casting, spin coating, spraying and dip coating. The amphiphilic lipid was first dissolved in ethanol to make a stock solution. The lipid / ethanol mixture was then disposed onto the substrate surface. The coated samples were left under environmental air condition for at least 12 h for the ethanol to evaporate. The lipid layer was then fully hydrated in excess water condition to form a thin film with bicontinuous cubic structure (Pn3m type) on the substrate surface.
(ii) To load the antimicrobial peptide (i.e., LL-37) into the coating, the peptide was first dissolved in phosphate buffered saline at pH 7.4 to achieve a resulting weight of AMP / amphiphilic lipid in the coating (between 0.1 to 70 wt %). The coated substrate was then immersed into this AMP solution. The AMP spontaneously integrated into interior nanostructure of the thin film to form antibacterial coating.

### Example 3: Preparation of antimicrobial films by coating of a pre-mixed liquid crystalline AMP film.

Different amount of antimicrobial components (i.e., peptide powder, antimicrobial essential oils) were added to liquid amphiphilic lipids to obtain specific lipid to antimicrobial drug weight ratios. This mixture was drop casted onto the substrate. Then, the coated surfaces were immersed in PBS buffer (i.e. at pH7.4) at least for three hours to reach full hydration.

### Example 4: Spin coating of a GMO / AMP films.

(i) *Formation of the lipid base coating*: 20µl of 5% (w/v) solution of glycerol monooleate in ethanol was spin coated onto silicon wafers in two steps: 5s, 300 rpm followed by another 10s with 3000 rpm. The spin-coated samples were left in air under environmental conditions for at least 12 h for all the solvent to evaporate. GISAXS, AFM and ellipsometry confirmed the formation of thin films on the surface of silicon wafers. In this example, 0.08 µg of GMO was deposited on 1cm² of silicon wafer. The spin-coated GMO film thickness under environmental conditions was at least 279 nm by ellipsometry.
(ii) *Loading of the peptide into the film:* The GMO coated silicon wafers were immersed in a solution of LL-37 in PBS (at pH 7.4) for at least three hours at room temperature. To reach specific GMO/LL-37 weight ratios, various solutions of LL-37 with different concentrations have been prepared.

### Example 5: drop casting of a glycerol monooleate (GMO) / LL-37 film.

(i) *Formation of the lipid base coating:* 16µl of 0.5% (w/v) solution of GMO in ethanol was drop-casted onto silicon wafers. The drop-casted samples were left in air under environmental conditions for at least 12 h for the solvent to evaporate. GISAXS, AFM and ellipsometry measurements confirm the formation of thin films on the surface of silicon wafers. In this example, 0.08 ug of GMO was deposited on 1cm² of silicon wafer with a film thickness of 280 nm, measured with ellipsometry.
(ii) *Loading of peptide into the film:* GMO coated silicon wafers were immersed into solution of LL-37 in buffer (pH 7.4) for at least three hours at room temperature. To reach specific GMO / LL-37 weight ratios, various solutions of LL-37 with different concentrations were prepared. Representative GISAXS measurements of the samples confirming the different structures are presented in Figure 1.

### Example 6: Proof of LL-37 integration into the coating from surrounding solution.

Coated silicon wafers with thin films of GMO were hydrated for at least 3 hours in PBS water and then immersed in 300 µL of LL-37 solution in buffer with various concentration of LL-37 to reach specific final GMO/ LL-37 weight ratios in the coating (90:10, 50:50 and 30:70).

The LL-37 content in the buffer solution was studied with fluorometry before and after incubation with the coated silicon wafer. The difference in LL-37 concentration before and after incubation defines the amount of LL-37 that was integrated spontaneously into the coating structure (see decrease in fluorescence intensity in Fig. 5). As it has shown, the concentration of the LL-37 solution decreased after incubation with GMO thin films proofing the spontaneous integration of LL-37 into lipid thin films from solution.

To show that the integrated LL-37 is not released from the coating into buffer again, the loaded coatings were immersed into LL-37 free buffer solution and the LL-37 concentration in the surrounding buffer was monitored. Therefore, the coated wafers were rinsed with PBS buffer and left in 300 µL PBS solution for three hours. Fig. 6 shows the release behavior of the LL-37 from the coating. No release of LL-37 into the surrounding buffer solution was observed for any of the samples.

### Example 7: pre-mixed liquid-crystalline AMP film on glass substrates.

1 mg of GMO was weighted and melted in a water bath at 40°C. LL-37 was added to the pure liquid GMO to achieve weight GMO / LL-37 weight ratios of 90 / 10, 75 / 25 and 50/50. These mixtures were then drop-casted on glass substrate and left to cool down to room temperature. The coated glass slides were immersed in PBS buffer (pH 7.4) for three hours to hydrate. To proof the integration of LL-37 into the internal nanostructure and further investigate dependence of the nanostructure type on the GMO / LL-37 ratio, the sample were measured with SAXS. Therefore, the glass slips were sandwiched between two mica foils in a custom-made film sample holder. Fig. 7 shows the resulting SAXS data on the internal nanostructures of the antibacterial coatings depending on the weight ratio of LL-37.

### Example 8: Proof of response to external stimuli.

The silicon wafer was spin-coated with GMO and post-loaded with LL-37 at a GMO/LL-37 wt ratio of 1/1. GISAXS was then used to evaluate the coating structure between 5% and 90% relative humidity. Figure 2 shows the GISAXS data with the change in nanostructure from lamellar structure at 5% humidity to mostly sponge structure at 90% humidity.

### Example 9: Proof of antimicrobial activity of the lipidic liquid crystalline films and its dependence on nanostructure type.

The antibacterial activity of a GMO / LL-37 coatings on silicon wafers was assessed against *Pseudomonas Aeruginosa* and *S.aureus* using microbiological in-vitro assays (colony counting and optical density measurements). Whereas the coating in absence of LL-37 (Pn3m structure) was not active against bacteria, the LL-37 containing coating with internal Im3m structure and even more with lamellar structure were highly active against both, Gram-negative (*Aeruginosa*) and Gram-positive (*S.aureus*) bacteria strains (see Figure 3).

Further antibacterial touch test against *E.coli* confirm the antimicrobial activity of the lipidic liquid crystalline films and its dependence on the type of nanostructure (see Figure 4). The highest reduction was observed for the coatings with 50 and 70 % LL-37 relative to GMO (lamellar structure and sponge phase). The concentration of LL-37 has been kept constant at 80 µg.

## Claims

1. Use of an antimicrobial liquid crystal composition for coating a surface, wherein the composition comprises:
(a) one or more amphiphilic lipids, optionally having a hydrophilic-lipophilic balance (HLB) value of less than 10;
(b) one or more antimicrobial agents selected from the group consisting of antimicrobial peptides, optionally amphiphilic antimicrobial peptides, antimicrobial oils and hydrophobic and/or amphiphilic antibiotics; and
(c) water;
wherein the composition forms liquid crystals at and/or above room temperature, optionally at temperatures at and/or above 15, 20 or 25 °C.

2. The use according to claim 1, wherein the amphiphilic lipids are selected from the group consisting of fatty acids, mono- and diglycerides of fatty acids, mono- and diesters of propylene glycol, glycolipids, phospholipids, 1-palmitoyl-2-oleoyl-sn-glycero-3-phospho-glycerol, 1-palmitoyl-2-oleoylphosphatidylcholine, dipalmitoylphosphatidylcholine, phosphatidylglycerol, phosphatidylglycerol, oleic acid monoglyceride, oleic acid diglyceride, diglycerol monooleate, diisopropyl dilinoleate, phytantriol, oleic acid, linoleic acid monoglyceride, linoleic acid diglyceride, linoleic acid, palmitic acid, palmitic acid monoglyceride, palmitic acid diglyceride, ascorbyl palmitate, palmitoleic acid, palmitoleic acid monoglyceride, palmitoleic acid diglyceride, sapienic acid, sapienic acid monoglyceride, sapienic acid diglyceride, elaidic acid, elaidic acid monoglyceride, elaidic acid diglyceride, docosahexaenoic acid, docosahexaenoic acid monoglyceride, docosahexaenoic acid diglyceride, eicosapentaenoic acid, eicosapentaenoic acid monoglyceride, eicosapentaenoic acid diglyceride, alkyl and alkylen amines, optionally oleoylamine, oleoylethanolamide, lauric acid, lauric acid monoglyceride, lauric acid diglyceride, myristic acid, myristic acid monoglyceride, myristic acid diglyceride, and urea-based lipids.

3. The use according to claim 1 or 2, wherein the carbon number of the amphiphilic lipids is between 8 and 30, optionally between 10 and 24 and/or the alkyl chains are mono-, di- or poly-unsaturated.

4. The use according to any of claims 1 to 3, wherein the melting point of the amphiphilic lipids is between 5 and 60 °C, optionally between 5 and 40 °C.

5. The use according to any of claims 1 to 4, wherein the antimicrobial agent is selected from the group consisting of proteins, optionally LL-37 and nisin; essential oils from plants; essential oils from black pepper, tea tree, copaiba, cinnamon, clove, citronella, pumpkin, lime and/or lemon; antimicrobial peptides; Tn-AFP1 from coconut water, PaDef from Avocado, J1 from fruit peppers, Ca-LTP1 from chili pepper; gramicidin; melittin; and alamethicin.

6. The use according to any of claims 1 to 5, wherein the weight ratio between the amphiphilic lipids and the antimicrobial agents is selected from the group consisting of 99:1 to 1:99, optionally 30:70 to 90:10, optionally 40:60 to 80:20, optionally 50:50.

7. The use according to any of claims 1 to 6, wherein the composition has a structure selected from the group consisting of inverse bicontinuous cubic phases (*Im3m, Ia3d* and *Pn3m* type), inverse hexagonal phase (*H₂* symmetry), discontinuous micellar cubic phase (*Fd3m* type), lamellar phase (*Lₐ*)*,* sponge phase (*L₃*), inverse microemulsion (*L₂*) and mixtures thereof.

8. The use according to any of claims 1 to 7, wherein the amphiphilic lipid is a monoglyceride, optionally glycerol monooleate and/or the antimicrobial agent is an antimicrobial peptide, optionally LL-37.

9. The use according to any of claims 1 to 8, wherein the antimicrobial liquid crystal composition is used for spin coating, dip-coating, spraying or drop casting the surface.

10. The use according to any of claims 1 to 9, wherein the surface to be coated is a surface of a medical device, optionally of a medical implant, optionally a surface selected from the group consisting of silicon wafers, glass, rubber latexes, polyurethanes, catheter surfaces, titanium oxide and ceramics.

11. A method for coating a surface with an antimicrobial liquid crystal composition, the method comprising the following steps:
(i) providing a surface to be coated;
(ii) contacting the surface of step (i) with an antimicrobial liquid crystal composition comprising:
(a) one or more amphiphilic lipids, optionally having a hydrophilic-lipophilic balance (HLB) value of less than 10;
(b) one or more antimicrobial agents selected from the group consisting of antimicrobial peptides, optionally amphiphilic antimicrobial peptides, antimicrobial oils and hydrophobic and/or amphiphilic antibiotics; and
(c) water;
wherein the composition forms liquid crystals at and/or above room temperature, optionally at temperatures at and/or above 15, 20 or 25 °C to form an antimicrobial liquid crystal coating on the surface.

12. The method according to claim 11, wherein the method comprises the following steps:
(i) providing a surface to be coated;
(ii) providing and mixing one or more amphiphilic lipids, optionally having a hydrophilic-lipophilic balance (HLB) value of less than 10, and one or more antimicrobial agents selected from the group consisting of antimicrobial peptides, optionally amphiphilic antimicrobial peptides, antimicrobial oils and hydrophobic and/or amphiphilic antibiotics to form a non-hydrated mixture;
(iii) drop casting the mixture of step (ii) onto the surface of step (i); and
(iv) hydrating the coated surface to form an antimicrobial liquid crystal coating, optionally by immersing the surface in an aqueous solution, optionally a solution selected from the group consisting of phosphate-buffered saline, imidazole-, acetate-, citrate-, HEPES-, bicarbonate, carbonate-, and Tris-buffer, optionally at a pH between about 2 to about 9, human plasma, blood, water and water-vapor.

13. The method according to claim 11, wherein the method comprises the following steps:
(i) providing a surface to be coated;
(ii) providing one or more amphiphilic lipids, optionally having a hydrophilic-lipophilic balance (HLB) value of less than 10, optionally dissolved in a solvent suitable for dissolving the lipid, optionally a solvent selected from the group consisting of ethanol, chloroform, THF, DMSO, methanol, propanol, and acetone;
(iii) applying the lipid, optionally the lipid/solvent mixture onto the surface of step (i) and optionally evaporating the solvent;
(iv) hydrating the lipid layer with water to form a liquid crystalline film on the surface;
(v) providing one or more antimicrobial agents selected from the group consisting of antimicrobial peptides, optionally amphiphilic antimicrobial peptides, antimicrobial oils and hydrophobic and/or amphiphilic antibiotics, optionally dissolved and/or suspended in a solvent suitable for dissolving and/or suspending the antimicrobial agent, optionally a solvent selected from the group consisting of phosphate buffered saline, imidazole-, acetate-, citrate-, HEPES-, bicarbonate, carbonate-, and Tris-buffer, optionally at pH between about 2 to about 9;
(vi) contacting, optionally by immersing, the coated surface of step (iv) with the antimicrobial agent of step (v) to form an antimicrobial liquid crystal coating.

14. The method according to any of claims 11 to 13, wherein the amphiphilic lipids are selected from the group consisting of fatty acids, mono- and diglycerides of fatty acids, mono- and diesters of propylene glycol, glycolipids, phospholipids, 1-palmitoyl-2-oleoyl-sn-glycero-3-phosphoglycerol, 1-palmitoyl-2-oleoylphosphatidylcholine, dipalmitoylphosphatidylcholine, phosphatidylglycerol, phosphatidylglycerol, oleic acid monoglyceride, oleic acid diglyceride, diglycerol monooleate, diisopropyl dilinoleate, phytantriol, oleic acid, linoleic acid monoglyceride, linoleic acid diglyceride, linoleic acid, palmitic acid, palmitic acid monoglyceride, palmitic acid diglyceride, ascorbyl palmitate, palmitoleic acid, palmitoleic acid monoglyceride, palmitoleic acid diglyceride, sapienic acid, sapienic acid monoglyceride, sapienic acid diglyceride, elaidic acid, elaidic acid monoglyceride, elaidic acid diglyceride, docosahexaenoic acid, docosahexaenoic acid monoglyceride, docosahexaenoic acid diglyceride, eicosapentaenoic acid, eicosapentaenoic acid monoglyceride, eicosapentaenoic acid diglyceride, alkyl and alkylen amines, optionally oleoylamine, oleoylethanolamide, lauric acid, lauric acid monoglyceride, lauric acid diglyceride, myristic acid, myristic acid monoglyceride, myristic acid diglyceride, and urea-based lipids.

15. The method according to any of claims 11 to 14, wherein the carbon number of the amphiphilic lipids is between 8 and 30, optionally between 10 and 24 and/or the alkyl chains are mono-, di- or poly-unsaturated.

16. The method according to any of claims 11 to 15, wherein the melting point of the amphiphilic lipids is between 5 and 60 °C, optionally between 5 and 40 °C.

17. The method according to any of claims 11 to 16, wherein the antimicrobial agent is selected from the group consisting of proteins, optionally LL-37 and nisin; essential oils from plants; essential oils from black pepper, tea tree, copaiba, cinnamon, clove, citronella, pumpkin, lime and/or lemon; antimicrobial peptides; Tn-AFP1 from coconut water, PaDef from Avocado, J1 from fruit peppers, Ca-LTP1 from chili pepper; gramicidin; melittin; and alamethicin.

18. The method according to any of claims 11 to 17, wherein the weight ratio in the coating between the amphiphilic lipids and the antimicrobial agents is selected from the group consisting of 99:1 to 1:99, optionally 30:70 to 90:10, optionally 40:60 to 80:20, optionally 50:50.

19. The method according to any of claims 11 to 18, wherein the coating has a structure selected from the group consisting of inverse bicontinuous cubic phases (*Im3m, Ia3d* and *Pn3m* type), inverse hexagonal phase (*H₂* symmetry), discontinuous micellar cubic phase (*Fd3m* type), lamellar phase (*Lₐ*), sponge phase (*L₃*), inverse microemulsion (*L₂*) and mixtures thereof.

20. The method according to any of claims 11 to 19, wherein the amphiphilic lipid is a monoglyceride, optionally glycerol monooleate and/or the antimicrobial agent is an antimicrobial peptide, optionally LL-37.

21. The method according to any of claims 11 to 20, wherein the surface to be coated in step (i) is a surface of a medical device, optionally of a medical implant, optionally a surface selected from the group consisting of silicon wafers, glass, rubber latexes, polyurethanes, catheter surfaces, titanium oxide and ceramics.

22. A device, optionally a medical device or medical implant, optionally having a surface selected from the group consisting of silicon wafers, glass, rubber latexes, polyurethanes, catheter surfaces, titanium oxide and ceramics, comprising an antimicrobial liquid crystal composition coating obtainable, optionally prepared, by the method according to any of claims 11 to 21.
